# EUROPÄISCHE PATENTSCHRIFT

(11) **EP 0 734 106 B1**
(45) Veröffentlichungstag und Bekanntmachung des Hinweises auf die Patenterteilung: **02.05.2001**
(21) Anmeldenummer: 96103024.4
(22) Anmeldetag: 29.02.1996
(51) Int. Cl.: H01T 4/10

(54) **Anordnung zur Ableitung von Überspannungen und zur Löschung des Netzfolgestromes**
Device for arresting overvoltages and for extinction of the sequential line current
Dispositif de dérivation de surtensions et d'extinction du courant de ligne subséquent

(30) Priorität: 21.03.1995 DE 19510181
(43) Veröffentlichungstag der Anmeldung: 25.09.1996
(73) Patentinhaber: DEHN + SÖHNE GMBH + CO. KG, D-90489 Nürnberg (DE)
(72) Erfinder: Hasse, Peter, Dr.-Ing., 92318 Neumarkt/Opf (DE); Zahlmann, Peter, Dr.-Ing., 92318 Neumarkt (DE); König, Raimund, 92369 Sengenthal (DE)
(74) Vertreter: Meissner, Bolte & Partner

(56) Entgegenhaltungen:
- CH-A- 592 973
- DE-A- 3 224 003
- DE-A- 3 502 421
- DE-A- 3 642 480
- FR-A- 337 038
- FR-A- 347 561
- FR-A- 1 052 741
- US-A- 2 473 850

## Beschreibung

Die Erfindung geht aus von einer Anordnung zur Ableitung von Überspannungen und zur Löschung des Netzfolgestromes mit zwei Funkenstecken, von denen eine erste Funkenstrecke der Zündung des Überschlages dient und hiermit einen Überschlag auch an der anderen, zweiten Funkenstrecke einleitet, gemäß Oberbegriff des Anspruchs 1.

Eine gattungsbildende Anordnung zum Überspannungsschutz einer Leitung ist aus der CH-A-592 973 bekannt. Nach der dortigen Lehre soll die Strombelastbarkeit der Überspannungsschutzschaltung auf ein Mehrfaches der Belastbarkeit einzelner Überspannungsableiter vergrößert werden. Hierfür wird vorgeschlagen, mehrere Überspannungsableiter jeweils in Serie mit einem Widerstand zwischen zwei Leitern einer Leitung, welche gegen das Auftreten von Überspannungen geschützt werden soll, so anzuordnen, daß die einzelnen Serienschaltungen von Überspannungsableiter und Widerstand parallel zueinander liegen. Die dort erwähnten Widerstände können entweder als Ohm'sche Widerstände ausgeführt sein oder es können nichtlineare Elemente Verwendung finden.

Bei der DE 42 40 138 A1 ist die erste Funkenstrecke relativ hochohmig mit einer eine relativ kurze Überschlagstrecke aufweisenden Isolierschicht, während die mit ihr in Reihe liegende und nachgeschaltete zweite Funkenstrecke demgegenüber niederohmig ist und eine relativ lange Überstrecke aufweisende Isolierschicht besitzt. Im Überspannungsfall liegt der größte Teil dieser Spannung an der hochohmigen ersten Funkenstrecke an und bringt diese zum Zünden. Der dann über diese Reihenschaltung fließende Strom läßt an der zweiten Funkenstrecke einen Spannungsabfall entstehen, der auch die zweite Funkenstrecke zum Zünden bringt. Man erhält den Vorteil zweier, voneinander räumlich getrennter Lichtbögen, so daß, gegenüber einer Einzelfunkenstrecke, über der gesamten Anordnung zum Zeitpunkt des Löschens die doppelte Bogenspannung liegt. Hierdurch werden günstigere Löschbedingungen erreicht. Nachteilig ist nur, daß der gesamte Strom über beide Funkenstrecken zu fließen hat, d.h. beide Funkenstrecken müssen entsprechend groß gebaut werden und unterliegen außerdem dem gleichen Verschleiß aufgrund der thermischen Effekte der Lichtbogen.

Weiterhin ist aus der CH-PS 596 681 eine Steuerungsanordnung für die Funkenstrecken eines Überspannungsableiters bekannt, bei welcher zwei Hauptfunkenstrecken hintereinander geschaltet sind und parallel zu den Hauptfunkenstrecken Steuerwiderstände mit verschiedenem Exponenten geschaltet sind. Um das Ansprechverhalten gezielt zu steuern sind bei den zwei räumlich getrennten Hauptfunkenstrecken die Steuerwiderstände so bemessen, daß bei einer dort fälschlich als Löschspannung bezeichneten Spannung die Amplitude der Spannung an dem Widerstand mit dem kleinerem Exponenten größer ist, als die der Spannung an dem Widerstand mit dem größerem Exponenten. Weiterhin ist dem Steuerwiderstand mit dem kleinerem Exponenten eine Reihenschaltung aus einem linearen Widerstand und einer Schaltfunkenstrecke parallel geschaltet, wobei die Schaltfunkenstrecke räumlich von den beiden Hauptfunkenstrecken getrennt ist. Eine Anregung, durch die gemäß der nachstehenden im einzelnen erläuterten Erfindung einerseits die Forderung nach einem möglichst niedrigem Schutzpegel, andererseits die Forderung nach hoher Stoßstromtragfähigkeit bzw. hohem Folgestrom-Löschvermögen erfüllt werden kann, ist der Steuerungsanordnung gemäß CH-PS 596 681 nicht zu entnehmen.

Aus DE-OS 38 12 058 kennt man einen Überspannungsschutz in Niederspannungsanlagen, bei dem einer blitzstromtragfähigen und folgestromlöschfähigen Funkenstrecke ein Leitungszweig parallel geschaltet ist, der in Reihenschaltung einen Varistor und eine Impedanz aufweist. Mit dieser Anordnung werden relativ energieschwache Ströme über den Leitungszweig aus Impedanz und Varistor abgeleitet, während relativ große Ströme über den anderen, die Funkenstrecke aufweisenden Zweig dieser Parallelschaltung abgeführt werden, da ein Varistor diesen großen Strömen nicht standhalten würde. Da der weitaus größte Teil der Fälle auftretender Überspannungen von fernen Blitzeinschlägen und von Schaltvorgängen herrühren, sind diese so energieschwach, daß sie über den Varistor abgeleitet werden. Ein Ansprechen der Funkenstrecke erfolgt somit nur in den relativ seltenen Fällen energiestarker Überspannungen mit hohen Stoßströmen aufgrund eines nahen oder sogar direkten Blitzeinschlages. Diese Konzeption der Anordnung nach DE-OS 38 12 058 berührt die Aufgabenstellung und Lösung der vorliegenden Erfindung nicht.

Schließlich ist aus der DE-AS 2 062 063 eine Schutzeinrichtung für Hochspannungsanlagen mit zwei parallel zueinander liegenden Funkenstrecken bekannt, bei der eine Funkenstrecke ein gleichmäßiges elektrisches Feld für Überschläge im Bereich von Impulsspannungen und die andere Funkenstrecke ein ungleichmäßiges elektrisches Feld für Überschläge im Bereich langsamer Wellenspannungen aufweist. Eine Anregung, die beiden Funkenstrecken im Funktionsablauf von Zünden und Löschen vorteilhaft auszubilden ist der Schutzeinrichtung gemäß DE-AS 2 062 063 nicht zu entnehmen.

Aus FR 337 038 ist eine elektrische Leiterfunkenstrecke zum Neutralisieren von Blitzeinschlägen und Überspannungen bekannt. Hierbei ist zwischen einem Leiter und der Erde eine Parallelschaltung aus einer Funkenstrecke und einer Induktivität bekannt. Die Funkenstrecke befindet sich zwischen zwei in einem größeren Abstand voneinander vorgesehenen Kontaktstellen von Leitern, wobei einer dieser Leiter an die spannungsführende Leitung und der andere dieser Leiter an Erde angeschlossen ist. Die Induktivität geht von dem spannungsführenden Leiter aus und endet in einer dritten Kontaktstelle, die sich in relativ kurzem Abstand von der Kontaktstelle befindet, deren Leiter mit Erde verbunden ist. Statt der Induktivität könnte auch eine Kapazität vorgesehen sein. Die Anordnung nach FR 337 038 arbeitet mit einer sogenannten Reflektion, die dort als "wellenförmige Bewegung" deklariert ist und einen Überschlag zwischen den beiden in einem größeren Abstand voneinander befindlichen Kontaktstellen bewirkt.

Der Erfindung liegt die Aufgabe zugrunde, ausgehend vom Gegenstand der CH-A-592 973 eine weitergebildete Anordnung zur Ableitung von Überspannungen und zur Löschung des Netzfolgestromes mit zwei Funkenstrecken zu schaffen, deren Funktionsablauf von Zünden und Löschen vorteilhaft ausgebildet ist.

Diese Aufgabe wird gemäß Anspruch 1 dadurch gelöst, daß die erste und die zweite Funkenstrecke zueinander parallel geschaltet sind, daß die zweite Funkenstrecke eine wesentlich größere Ansprechspannung als die erste Funkenstrecke hat, daß in dem Leitungszweig der ersten Funkenstrecke mit dieser ein 0hm'scher Widerstand in Reihe geschaltet ist, der aus einem im Überschlagsfall aufgrund seiner Erhitzung ein Löschgas freisetzenden Material besteht, und daß die vorgenannten Elemente der Anordnung so bemessen sind, daß der bei Zündung der ersten Funkenstrecke an ihr und dem damit in Reihe geschalteten 0hm'schen Widerstand entstehende Spannungsabfall größer als die Ansprechspannung der zweiten Funkenstrecke ist, und daß die zweite Funkenstrecke eine größere Stromtragfähigkeit als die erste Funkenstrecke besitzt. Hiermit erfolgt eine Funktionstrennung in der Weise, daß die erste Funkenstrecke nur die Funktion der Zündung der Anordnung übernimmt. Aufgrund der Reihenschaltung der ersten Funkenstrecke mit einem Ohm'schen Widerstand entsteht an ihr ein so großer Spannungsabfall, daß die zweite Funkenstrecke zum Ansprechen gebracht wird. Die zweite Funkenstrecke führt nach erfolgter Zündung den größten Teil des Stromstoßes bzw. Folgestromes und bringt diesen zum Löschen. Durch die Parallelschaltung aus erster und zweiter Funkenstrecke kann als weiterer Vorteil neben diesen Vorteilen im elektrischen Verhalten auch eine mechanische Integration der beiden eingangsseitigen Elektroden von erster und zweiter Funkenstrecke erreicht werden. Bei einer flächigen Bauweise der Gesamtanordnung (siehe Anspruch 5 und folgende) wird wesentlich weniger an Platz und Materialeinsatz beansprucht als beim Einsatz vorbekannter, rotationssymmetrischer Funkenstrecken.

Die erste Funkenstrecke erfüllt also in der erfindungsgemäßen Anordnung die Schutzfunktion und erfüllt die Forderung nach einem möglichst niedrigem Schutzpegel. Damit würden große Stoßströme bzw. Netzfolgeströme zur Beschädigung dieser empfindlichen Funkenstrecke führen. Aufgrund des im Leitungszweig der ersten Funkenstrecke befindlichen Widerstandes fließt dagegen über diesen Leitungszweig und damit über die erste Funkenstrecke nach erfolgter Zündung auch der zweiten Funkenstrecke nur noch ein ganz geringer Strom. Dies hat den Vorteil, daß die erste Funkenstrecke relativ klein dimensioniert werden muß und nicht den thermischen Wirkungen eines größeren Stromes ausgesetzt ist. Von diesen beiden Funkenstrecken muß nur die zweite Funkenstrecke so bemessen sein, daß sie den größeren Teil der anfallenden Stoß- bzw. Folgeströme aushalten kann. Hiermit sind die bei solchen Überspannungsableiteranordnungen in der Praxis entstehenden, sich widersprechenden Forderungen nach einem möglichst niedrigen Schutzpegel einerseits bei gleichzeitig hoher Stoßstromtragfähigkeit bzw. hohem Folgestromlöschvermögen andererseits bei einer vorteilhaften Ausgestaltung der Gesamtanordnung erfüllt. Beim Gegenstand der Erfindung sind also zwei Funktionseinheiten vorhanden, deren Zündung bewußt zeitlich nacheinander erfolgt. Die vorstehend erläuterte Funktionsaufteilung einer solchen Anordnung auf die beiden Funkenstrecken ergibt einen zwangsläufigen und schnellen Ablauf der Vorgänge, indem nach der Zündung der ersten Funkenstrecke sehr schnell auch die Zündung der zweiten Funkenstrecke erfolgt, welche die Funktion einer Hauptentladungsstrecke für den entstehenden Folgestrom hat. Die erste Funkenstrecke ist also nur kurzzeitig am eigentlichen Ableitvorgang beteiligt und ermöglicht eine kleine Ansprechspannung der Gesamtanordnung, da ihre Ansprechspannung wesentlich kleiner sein kann als die der zweiten Funkenstrecke. Die Anordnung nach der Erfindung eignet sich beispielsweise vorteilhaft als Netzableiter.

Im vorstehenden Zusammenhang empfehlen sich die Unterschiede in den Elektrodenabständen der ersten und der zweiten Funkenstrecke gemäß den Ansprüchen 2 und 3. Der im Verhältnis zur ersten Funkenstrecke große Elektrodenabstand der zweiten Funkenstrecke fördert den Löschvorgang.

Eine bevorzugte konstruktive Ausgestaltung der Erfindung ist Gegenstand des Anspruches 4. Hierbei wirkt sich besonders vorteilhaft das Merkmal aus, wonach die Ohm'sche Widerstandselektrode aus einem Material besteht, das im Überschlagsfall aufgrund seiner Erhitzung ein Löschgas freisetzt, da dies den LichtbDgen in die gewünschte Richtung bewegt. Dies dient auch zur Unterbrechung des Folgestromes.

Weitere Vorteile und Merkmale der Erfindung sind den weiteren Unteransprüchen, auf deren Inhalt hiermit ausdrücklich Bezug genommen wird, sowie der nachfolgenden Beschreibung und der zugehörigen Zeichnung von Ausführungsmöglichkeiten der Erfindung zu entnehmen. In der Zeichnung zeigt:
- Fig. 1:: das elektrische Schaltbild einer Anordnung nach der Erfindung,
- Fig. 2:: den prinzipiellen elektrischen und mechanischen Aufbau einer Anordnung nach der Erfindung,
- Fig. 3:: : die Elektroden beider Funkenstrecken in einer räumlich zusammengefaßten Bauweise in einem Schnitt gemäß der Linie III-III in Fig. 4,
- Fig. 4:: die Draufsicht auf Fig. 3,
- Fig. 5:: eine weitere bauliche Ausführung beider Funkenstrecken mit ihren Elektroden in der Seitenansicht und zum Teil im Schnitt,
- Fig. 6:: in einem Schnitt gemäß der Linie VI-VI der Fig. 7 eine dritte Ausführungsmöglichkeit der Gestaltung der beiden Funkenstrecken mit ihren Elektroden,
- Fig. 7:: die Draufsicht auf Fig. 6.

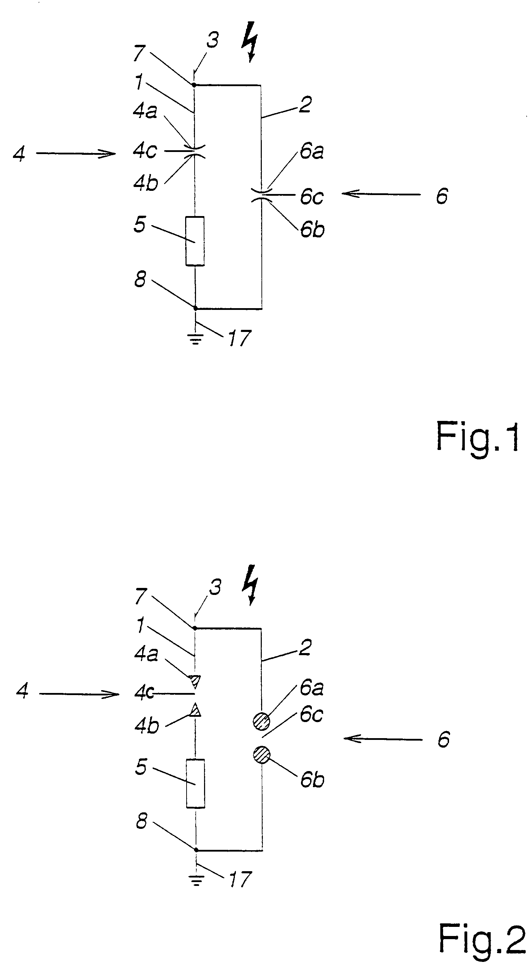

Das Schaltschema gemäß Fig. 1 zeigt eine Anordnung bestehend aus zwei parallel geschalteten Leitungszweigen 1, 2, mit der durch das Blitzzeichen angedeuteten Eingangsseite 3 und ferner der Erdung 17 der Ausgangsseite. Im Leitungszweig 1 ist eine erste Funkenstrecke 4 mit den beiden Elektroden 4a und 4b und damit in Reihe geschaltet eine Impedanz 5 vorgesehen. Diese Impedanz ist ein ohmscher Widerstand, oder ein Widerstand, der einen ohmschen Anteil und einen induktiven Anteil besitzt.

Im Parallelzweig 2 befindet sich die zweite Funkenstrecke 6 mit den Elektroden 6a und 6b. Im Überspannungsfall zündet zunächst die erste Funkenstrecke 4 deren Ansprechspannung wesentlich kleiner ist als die der zweiten Funkenstrecke 6. Hierzu empfiehlt es sich, daß der Abstand 6c der Elektroden 6a, 6b der zweiten Funkenstrecke 6 wesentlich größer ist als der Abstand 4c der Elektroden 4a, 4b der ersten Funkenstrecke (siehe Fig. 2 bis 4). Beispielsweise kann der Elektrodenabstand der zweiten Funkenstrecke 6 etwa 5 bis 10 mal größer sein als der Elektrodenabstand der ersten Funkenstrecke 4. Aufgrund des dann über den Leitungszweig 1 fließenden Stromes entsteht aufgrund einer entsprechenden Bemessung der vorgenannten Elemente 4, 5, 6 dieser Anordnung an dem Leitungszweig 1 zwischen den beiden Punkten 7, 8 ein Spannungsabfall, der eine Zündung der zweiten Funkenstrecke 6 bewirkt. Diese übernimmt aufgrund ihres dann sehr geringen Innenwiderstandes praktisch den gesamten Folgestrom. Die zweite Funkenstrecke 6, nämlich die Löschfunkenstrecke hat gegenüber der ersten Funkenstrecke (Zündfunkenstrecke 4) massive stoßstrom- und folgestromtragfähige Elektroden.

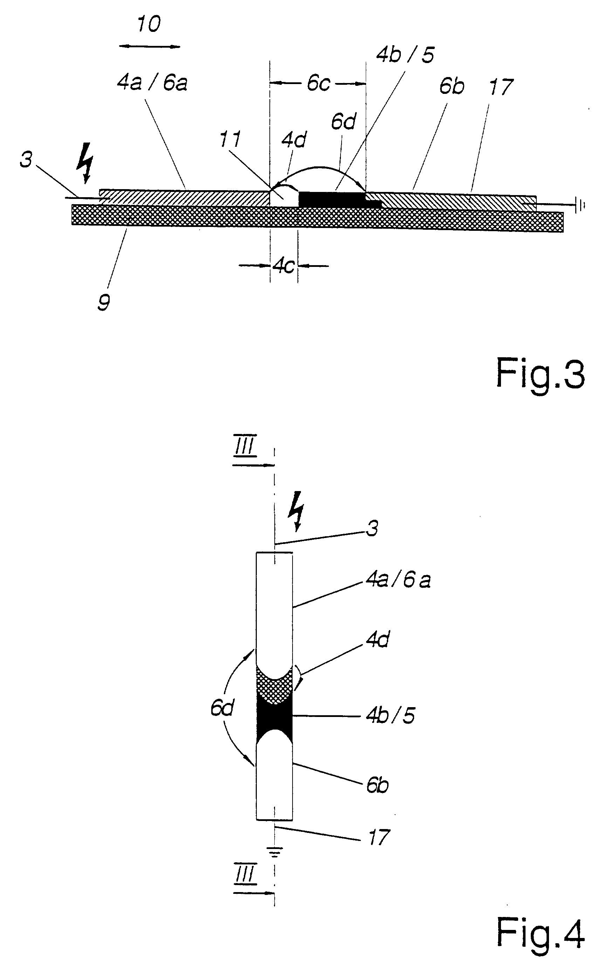

Erwähnt sei, daß die Lichtbogenausbildung zwischen den Elektroden 6a, 6b der zweiten Funkenstrecke 6 auch dadurch begünstigt wird, daß bereits mit dem Beginn des Auftretens der Überspannung am Eingang 3 durch den Lichtbogen zwischen den Elektroden 4a, 4b der ersten Funkenstrecke eine Vorionisation der zweiten Funkenstrecke erfolgt. Dies kann durch gestalterische Maßnahmen entsprechend der Fig. 3 bis 7 begünstigt werden. Die vorgenannten Abstände und auch der bereits eingangs erläuterte Größenunterschied der zweiten Funkenstrecke zur ersten Funkenstrecke ist aus der schematischen Darstellung gemäß Fig. 2 ersichtlich, wobei die Abstände 4c und 6c mit eingezeichnet sind. Außerdem ist in Fig. 2 angedeutet, daß durch verschiedene Elektrodenformen, die z.B. ein homogenes bzw. inhomogenes Feld erzeugen, ebenso ein unterschiedliches Zündverhalten erreicht werden kann. Dabei ist die in Fig. 2 dargestellte Kugelform eine bevorzugte Ausführung der Elektroden 6a, 6b der zweiten Funkenstrecke 6.

Fig. 3 und 4 zeigen als erstes Beispiel einer baulichen Ausführungsform der Erfindung. Dabei sind die elektrisch kurzgeschlossenen Elektroden 4a und 6a zu einer gemeinsamen metallischen eingangsseitigen Elektrode 4a/6a vereinigt. Diese beiden Elektroden 4a, 6a sind also elektrisch und mechanisch integriert. Ferner sind die Elektrode 4b der ersten Funkenstrecke und der Ohm'sche Widerstand 5 zu einem gemeinsamen Bauteil 4b/5 aus einem Material vereinigte das sowohl als Elektrode als auch als Widerstand dienen kann. Beispielsweise ist dies eine Keramik oder ein Isolierstoff, der durch Beimischung von leitfähigen Partikeln als Elektrode tätig sein kann und außerdem einen gewissen spezifischen Durchgangswiderstand, beispielsweise von 10³ Ω /cm aufweist. Somit entsteht eine 3-Elektrodenanordnung, bestehend aus zwei metallischen Elektroden 4a, 6a bzw. 6b und einer strombegrenzenden, nicht metallischen Elektrode 4b/5 Ohm'sche Widerstands-Elektrode. Damit über diese Elektrode 4b/5 nur der relativ kleine Strom des Leitungszweiges 1 läuft, muß diese Ohm'sche Widerstands-Elektrode einen Widerstandswert wie vorstehend angegeben aufweisen. Darüber hinaus besteht diese Elektrode aus einem Material, das im Überschlagsfall aufgrund seiner Erhitzung ein Löschgas freisetzt. Hierdurch werden die Löscheigenschaften und die Lichtbogenwanderung verbessert, und zwar nicht nur die des Lichtbogens 4d der ersten Funkenstrecke 4, sondern auch die des Lichtbogens 6d der zweiten Funkenstrecke 6, da an das Teil 4b/5 sich räumlich und auch elektrisch die zweite, metallische und mit der Erde 17 verbundene Elektrode 6b der zweiten Funkenstrecke 6 anschließt. Siehe hierzu die Positionen von 4d und 6d in den Fig. 3-7. Mit dieser flächigen Bauweise der Gesamtanordnung wird wesentlich weniger an Platz und Materialeinsatz beansprucht als beim Einsatz vorbekannter, rotationssymmetrischer Funkenstrecken.

Die vorbeschriebene Anordnung der Erfindung ist sehr leistungsfähig. Es sind baulich nur noch zwei metallische Elektroden, nämlich 4a/6a und 6b vorzusehen und so zu bemessen, daß sie ohne Schädigung den Folgestrom übernehmen können, wobei die Elektrode 4b und den Ohm'sche Widerstand 5 zu einem gemeinsamen Bauteil vereinigt sind. Die vorgenannten Bauteile 4a/6a, 4b/5 und 6b sind platten- oder scheibenförmig ausgebildet, dabei ineinander verschachtelt und bilden zusammen eine plattenförmige Schicht, die auf einer sie tragenden Grundplatte 9 aus einem Dielektrikum aufgebracht ist. Die Bauhöhe sowie die gesamte Größe dieser Einheit aus der vorgenannten Schicht und der Grundplatte 9 ist vorteilhafterweise sehr gering.

Fig. 3 zeigt ferner, daß die zugehörigen Oberflächen der Elektroden sich bevorzugt planparallel gegenüberstehen, so daß sich zwischen ihnen ein homogenes elektrisches Feld ausbildet.

Die Elektrode 4a/6a kann in Richtung des Doppelpfeiles 10 verstellt werden, wodurch der Abstand 4c der Elektroden 4a und 4b so veränderbar ist, daß die Anordnung auf die jeweils gewünschte Ansprechspannung einstellbar ist. Die Grundplatte 9 kann aus einem dielektrischen Material bestehen, dessen Dielektrikum erheblich von Luft abweicht und zudem bei Erhitzung ein Löschgas freisetzt. Dadurch tritt bereits bei kleinen Spannungen an der Grenzschicht dieses Dielektrikums zur Luft eine Gleitentladung auf, deren Einstellbarkeit durch Überbrückung der Oberfläche der Grundplatte 9 mittels der Elektrode 4a/6b möglich ist.

Das Luftvolumen 11 kann, falls dies erforderlich sein sollte, ebenso durch das Material der Grundplatte 9 ersetzt werden.

Der Anschluß 3 ist an die Elektrode 4a/6a und die Erdleitung 17 an die Elektrode 6b gelegt. Die metallischen Elektroden 4a, 6a und 6b sind beispielsweise aus Kupfer, insbesondere einem abbrandfesten Material wie Wolfram-Kupfer. Die Hauptentladung 6d der Hauptentladungsstrecke 6 findet zwischen den beiden metallischen Elektroden 4a/6a und 6b der Fig. 3, 4 statt. Hierzu gehört der Lichtbogen 6d. Der Lichtbogen 4d gehört dagegen zur Zündfunkenstrecke 4. Die Zündfunkenstrecke 4 kann auch in der bereits beschriebenen Art und Weise als Gleitfunkenstrecke ausgeführt sein. Auch hierzu ist die erläuterte Verstellbarkeit des Elektrodenabstandes von Vorteil.

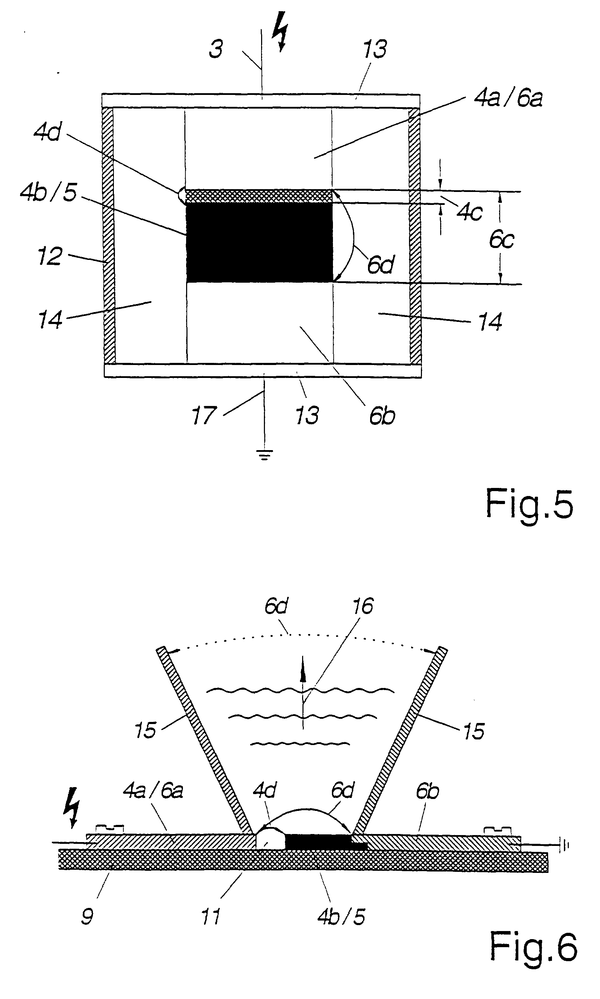

Eine in der Funktion mit dem Beispiel der Fig. 3, 4 prinzipiell gleiche, baulich aber andere Ausführungsform der Erfindung ist Gegenstand der Fig. 5. Sie zeigt in einem Gehäuse 12 mit Abdeckplatten 13 zwei rotationssymmetrische metallische Elektroden 4a/6a und 6b mit den elektrischen Anschlüssen 3 und 17, sowie der Ohm'schen Widerstands-Elektrode 4b/5. Die Lichtbogen 4d und 6d sind ebenfalls eingezeichnet, einschließlich der Abstände 4c und 6c.Der die vorgenannten Elektroden umschließende Ringraum 14 ist mit Luft gefüllt.

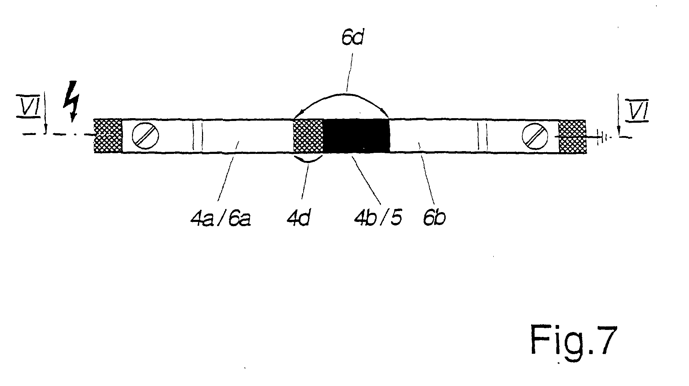

Die Ausführung nach den Fig. 6 und 7 ist im Prinzip so wie die Ausführung nach Fig. 3 und 4 aufgebaut. Der einzige Unterschied besteht darin, daß die flächig ausgebildeten, metallischen Elektroden 4a/6a und 6b in an sich bekannter Weise hörnerartige und auseinanderlaufende Verlängerungen 15 aufweisen. Hiermit wird ein Auseinanderlaufen des Lichtbogens 6d in der Pfeilrichtung 16 aufgrund des sich bildenden thermischen Auftriebes bzw. durch den Druck des unter Hitzeeinwirkung aus dem Grundplattenmaterial austretenden Gases erreicht und hiermit das Löschverhalten weiter verbessert.

Die elektrische Funktion der einzelnen Ausführungsbeispiele, insbesondere die Aufeinanderfolge der Zündung des Lichtbogens an einer ersten Funkenstrecke 4 und der Zündung einer zweiten Funkenstrecke 6 sind jeweils vom Prinzip her gleich. Für die Zündung der zweiten Funkenstrecke 6 ist die Vorionisation durch die Lichtbogenausbildung der ersten Funkenstrecke im Bereich der Impedanz-Elektrode 4b/5 von Vorteil, wie vorstehend bereits angedeutet.

## Patentansprüche

1. Anordnung zur Ableitung von Überspannungen und zur Löschung des Netzfolgestromes mit zwei Funkenstrecken (4, 6), von denen eine erste Funkenstrecke (4) der Zündung des Überschlages dient und hiermit einen Überschlag auch an der anderen, zweiten Funkenstrecke einleitet, wobei die erste und die zweite Funkenstrecke (4, 6) zueinander parallel geschaltet sind, wobei weiterhin in dem Leitungszweig der ersten Funkenstrecke mit dieser ein Ohm'scher Widerstand (5) in Reihe geschaltet ist und wobei weiterhin die vorgenannten Elemente so bemessen sind, daß der bei Zündung der ersten Funkenstrecke (4) an ihr und damit in Reihe geschalteten Ohm'schen Widerstand entstehende Spannungsabfall größer ist als die Ansprechspannung der zweiten Funkenstrecke (6),
dadurch gekennzeichnet, daß
die zweite Funkenstrecke (6) eine wesentlich größere Ansprechspannung als die erste Funkenstrecke (4) hat, daß der Ohm'sche Widerstand aus einem im Überschlagsfall aufgrund seiner Erhitzung ein Löschgas freisetzenden Material besteht und daß die zweite Funkenstrecke (6) eine größere Stromtragfähigkeit als die erste Funkenstrecke (4) besitzt.

2. Anordnung nach Anspruch 1, dadurch gekennzeichnet, daß der Elekrodenabstand (6c) der zweiten Funkenstrecke (6) größer ist als der Elektrodenabstand (4c) der ersten Funkenstrecke (4).

3. Anordnung nach Anspruch 2, dadurch gekennzeichnet, daß der Elektrodenabstand (6c) der zweiten Elektrode (6) etwa 5 bis 10 mal größer ist als der Elektrodenabstand (4c) der ersten Elektrode (4).

4. Anordnung nach Anspruch 3, dadurch gekennzeichnet, daß die Elektroden (4a, 6a) der ersten und der zweiten Funkenstrecke (4, 6) zu einer gemeinsamen, eingangsseitigen (3) Elektrode (4a/6a) vereinigt sind, daß die weitere Elektrode (4b) der ersten Funkenstrecke (4) mit dem Ohm'sen Widerstand (5) des ersten Leitungsweges zu einer gemeinsamen 0hm'schen Widerstands-Elektrode (4b/5) vereinigt sind, daß die weitere Elektrode (6b) der zweiten Funkenstrecke (6) mechanisch/elektrisch mit der Ohm'schen Widerstands-Elektrode vereinigt und ausgangsseitig an die Erde (17) anschließbar ist, und daß zwischen der eingangsseitigen Elektrode (4a/6a) und der Ohm'schen Widerstands--Elektrode (4b/5) eine Isolationsstrecke (11) vorgesehen ist.

5. Anordnung nach Anspruch 4, dadurch gekennzeichnet, daß die eingangsseitige Elektrode (4a/6a), die Ohm'sche-Widerstands-Elektrode (4b/5) und die weitere Elektrode (6b) der Funkenstrecke (6) jeweils plattenförmig ausgebildet und als eine plattenförmige Schicht auf einem Dielektrikum (9) befestigt sind, das bevorzugt ebenfalls plattenförmig ausgebildet ist.

6. Anordnung nach einem oder mehreren der Ansprüche 1 bis 5, dadurch gekennzeichnet, daß die 0hm'sche Widerstands-Elektrode (4b/5) aus einem Material besteht, das sowohl als Elektrode als auch als Ohm'scher Widerstand dient.

7. Anordnung nach Anspruch 6, dadurch gekennzeichnet, daß das Material der 0hm'schen Widerstands-Elektrode (4b/5) ein Keramikwerkstoff oder ein Isolierstoff ist, der durch Beimischung von leitfähigen Partikeln als Elektrode tätig sein kann und außerdem einen gewissen spezifischen Durchgangswiderstand, z.B. 10³ Ω /cm aufweist.

8. Anordnung nach einem oder mehreren der Ansprüche 1 bis 5 dadurch gekennzeichnet, daß das Dielektrikum (9) als Grundplatte ausgebildet ist und aus einem dielektrischen Material besteht, deren dielektrische Konstante erheblich von Luft abweicht und zudem bei Erhitzung ein Löschgas freisetzt.

9. Anordnung nach einem oder mehreren der Ansprüche 5 bis 8, dadurch gekennzeichnet, daß die eingangsseitige Elektrode (4a/6a), die Ohm'sche Widerstands-Elektrode (4b/5) und die weitere Elektrode (6b) der Funkenstrecke (6) jeweils zylindrisch ausgebildet und, mit ihren Stirnflächen sich gegenüberliegend, übereinander angeordnet sind.

10. Anordnung nach einem oder mehreren der Ansprüche 4 bis 9, dadurch gekennzeichnet, daß die Isolationsstrecke (11) aus Luft oder aus einem isolierenden, vorzugsweise Gas abgebendem Werkstoff besteht.

11. Anordnung nach einem oder mehreren der Ansprüche 4 bis 8, dadurch gekennzeichnet, daß von der eingangsseitigen Elektrode (4a/6a) und der Elektrode (6b) sich metallische Hörner (15) nach außen erstrecken, deren Abstand sich vorzugsweise nach außen hin erweitert, wobei die Befestigungsstellen der Hörnerelektroden (15) an den Elektroden der Funkenstrecken angrenzend an die Isolierstrecke (11) und den 0hm'schen Widerstand (5) vorgesehen sind bzw. mit den Elektroden (4a/6a) sowie (6b) als gemeinsames Teil ausgebildet sind.

12. Anordnung nach einem der Ansprüche 1 bis 11, dadurch gekennzeichnet, daß die der Erstzündung dienende erste Funkenstrecke (4) als Gleitfunkenstrecke ausgebildet ist.

13. Anordnung nach einem der Ansprüche 1 bis 12, gekennzeichnet durch eine Verstellung des Abstandes der Elektroden (4a, 4b; 6a, 6b) der ersten und/oder der zweiten Funkenstrecke.

## Claims

1. An arrangement for discharging overvoltages and for quenching the power-follow current, comprising two spark gaps (4, 6) of which a first spark gap (4) serves to strike the spark-over and thereby initiates a spark-over also at the other second spark gap, with the first and the second spark gap being connected parallel to each other, further with an ohmic resistor (5) in the branch conductor of the first spark gap being connected in series with same, and still further with the above-mentioned elements being dimensioned in such a manner that the voltage drop which is generated at the first spark gap (4) upon striking same, and thus at the ohmic resistor connected in series is higher than the response voltage of the second spark gap (6),
characterised in that
the second spark gap (6) has a substantially higher response voltage than the first spark gap (4), that the ohmic resistor consists of a material which releases a quenching gas due to the resistor being heated in the spark-over case, and that the second spark gap (6) has a higher current-carrying capacity than the first spark gap (4).

2. The arrangement according to Claim 1, characterised in that the electrode distance (6c) of the second spark gap (6) is wider than the electrode distance (4c) of the first spark gap (4).

3. The arrangement according to Claim 2, characterised in that the electrode distance (6c) of the second spark gap (6) is approximately 5 to 10 times wider than the electrode distance (4c) of the first spark gap (4).

4. The arrangement according to Claim 3, characterised in that the electrodes (4a, 6a) of the first and second spark gap (4, 6) are united to a common input-side (3) electrode (4a/ 6a), that the further electrode (4b) of the first spark gap (4) is united to a common ohmic resistor electrode (4b/5) with the ohmic resistor (5) of the first line path, that the further electrode (6b) of the second spark gap (6) is mechanically/electrically united with the ohmic resistor electrode and with its output side can be connected with ground (17), and that an insulating distance (11) is provided between the input-side electrode (4a/6a) and the ohmic resistor electrode (4b/5).

5. The arrangement according to Claim 4, characterised in that each of the input side electrode (4a/6a), the ohmic resistor electrode 4b/5), and the further electrode (6b) of the spark gap (6) are formed plate-shaped and are secured as a plate-shaped layer on a dielectric (9) which preferably is formed plate-shaped, too.

6. The arrangement according to one or several of Claims 1 to 5, characterised in that the ohmic resistor electrode (4b/ 5) consists of a material which serves both as an electrode and as an ohmic resistor.

7. The arrangement according to Claim 6, characterised in that the material of the ohmic resistor electrode (4b/5) is a ceramic or insulating substance which by means of adding conductive particles can operate as an electrode and, moreover, has a certain specific volume resistivity, e.g. 10³ Qcm.

8. The arrangement according to one or several of Claims 1 to 5, characterised in that the dielectric (9) is formed as a base plate and consists of a dielectric material whose dielectric constant differs considerably from that of air and moreover releases a quenching gas upon heating.

9. The arrangement according to one or several of Claims 5 to 8, characterised in that each of the input side electrode (4a/6a), the ohmic resistor electrode (4b/5), and the further electrode (6b) of the spark gap (6) is formed cylindrically, and with their faces opposite to one another, are arranged one above the other.

10. The arrangement according to one or several of Claims 4 to 9, characterised in that the insulation distance (11) consists of air or another insulating preferably gas-releasing material.

11. The arrangement according to one or several of Claims 4 to 8, characterised in that metallic horns (15) project outwardly from the input-side electrode (4a/6a) and the electrode (6b), whose distance preferably expands towards the outside, with the points of attachment of the horn electrodes (15) being provided at the electrodes of the gap distances, adjacent to the insulation distance (11) and the ohmic resistor (5) or formed as an integral part with the electrodes (4a/6a) and (6b), respectively.

12. The arrangement according to one of Claims 1 to 11, characterised in that the first spark gap (4) serving the initial striking is formed as a sliding spark gap.

13. The arrangement according to one of Claims 1 to 12, characterised by an adjustment of the distance of the electrodes (4a, 4b; 6a, 6b) of the first and/or the second spark gap.

## Revendications

1. Dispositif d'évacuation de surtensions et d'extinction du courant de suite fourni par le réseau, comportant deux éclateurs (4, 6), un premier éclateur (4) qui sert à l'amorçage de la décharge et ainsi déclenche une décharge aussi à l'autre et deuxième éclateur, le premier et le deuxième éclateurs (4, 6) étant montés en parallèle, en outre, dans la branche de ligne du premier éclateur étant montée en série avec celui-ci une résistance idéale (5) et en outre, les éléments précités étant dimensionnés de façon que la chute de tension qui apparaît à l'allumage du premier éclateur (5) dans celui-ci et la résistance idéale montée en série avec celui-ci soit supérieure à la tension de fonctionnement du deuxième éclateur (6),
caractérisé par le fait que le deuxième éclateur (6) a une beaucoup plus grande tension de fonctionnement que le premier éclateur (4), que la résistance idéale est constituée d'une matière qui, en cas de décharge, en raison de son chauffage, dégage un gaz d'extinction, et que le deuxième éclateur (6) a un plus grand courant admissible que le premier éclateur (4).

2. Dispositif selon la revendication 1, caractérisé par le fait que la distance (6c) des électrodes du deuxième éclateur (6) est supérieure à la distance (4c) des électrodes du premier éclateur (4).

3. Dispositif selon la revendication 2, caractérisé par le fait que la distance (6c) des électrodes du deuxième éclateur (6) est environ 5 à 10 fois plus grande que la distance (4c) des électrodes du premier éclateur (4).

4. Dispositif selon la revendication 3, caractérisé par le fait que les électrodes (4a, 6a) du premier et du deuxième éclateurs (4, 6) sont réunies en une électrode commune (4a/6a) côté entrée (3), que l'autre électrode (4b) du premier éclateur (4) et la résistance idéale (5) de la première branche de ligne sont réunies en une électrode résistance idéale commune (4b/5), que l'autre électrode (6b) du deuxième éclateur (6) est réunie mécaniquement et électriquement à l'électrode résistance idéale et peut être reliée du côté sortie à la terre (17), et qu'entre l'électrode côté entrée (4a/6a) et l'électrode résistance idéale (4b/5) est prévu un intervalle d'isolement (11).

5. Dispositif selon la revendication 4, caractérisé par le fait que l'électrode côté entrée (4a/6a), l'électrode résistance idéale (4b/5) et l'autre électrode (6b) du deuxième éclateur (6) sont chacune en forme de plaque et fixées sous la forme d'une couche en forme de plaque sur un diélectrique (9) qui est de préférence également en forme de plaque.

6. Dispositif selon une ou plusieurs des revendications 1 à 5, caractérisé par le fait que l'électrode résistance idéale (4b/5) est constituée d'une matière qui sert à la fois d'électrode et de résistance idéale.

7. Dispositif selon la revendication 6, caractérisé par le fait que la matière de l'électrode résistance idéale (4b/5) est une céramique ou un isolant qui, par addition de particules conductrices, peut agir comme électrode et en outre présente une certaine résistivité volumique, par exemple de 103 ohm/cm.

8. Dispositif selon une ou plusieurs des revendications 1 à 5, caractérisé par le fait que le diélectrique (9) est formé d'une plaque de base et constitué d'une matière diélectrique dont la constante diélectrique diffère beaucoup de celle de l'air et qui en outre dégage au chauffage un gaz d'extinction.

9. Dispositif selon une ou plusieurs des revendications 5 à 8, caractérisé par le fait que l'électrode côté entrée (4a/6a), l'électrode résistance idéale (4b/5) et l'autre électrode (6b) du deuxième éclateur (6) sont cylindriques et placées les unes au-dessus des autres avec leurs faces frontales se faisant face.

10. Dispositif selon une ou plusieurs des revendications 4 à 9, caractérisé par le fait que l'intervalle d'isolement (11) est constitué d'air ou d'un matériau isolant de préférence émettant un gaz.

11. Dispositif selon une ou plusieurs des revendications 4 à 8, caractérisé par le fait que de l'électrode côté entrée (4a/6a) et de l'électrode (6b) partent vers l'extérieur des cornes métalliques (15) dont la distance de préférence croît vers l'extérieur, les endroits de fixation des électrodes cornes (15) aux électrodes des éclateurs étant prévus près de l'intervalle d'isolement (11) et de la résistance idéale (5) ou formant une partie commune avec les électrodes (4a/6a et 6b).

12. Dispositif selon l'une des revendications 1 à 11, caractérisé par le fait que le premier éclateur (4) servant au premier amorçage est un éclateur à contournement.

13. Dispositif selon l'une des revendications 1 à 12, caractérisé par un réglage de la distance des électrodes (4a, 4b ; 6a, 6b) du premier et/ou du deuxième éclateur.
